(19) **Europäisches Patentamt / European Patent Office / Office européen des brevets**

(11) **EP 2 017 471 B1**

(12) **EUROPÄISCHE PATENTSCHRIFT**

(45) Veröffentlichungstag und Bekanntmachung des Hinweises auf die Patenterteilung:
**19.10.2011  Patentblatt 2011/42**

(51) Int Cl.:
*F03D 7/04* (2006.01)    *F03D 7/02* (2006.01)
*F03D 11/02* (2006.01)    *H02P 9/10* (2006.01)

(21) Anmeldenummer: **07022584.2**

(22) Anmeldetag: **21.11.2007**

(54) **Vorrichtung zur aktiven Dämpfung eines Triebstrangs bei einer Windenergieanlage**

Device for active moderation of the power house of a wind farm

Dispositif d'atténuation active d'une ligne de commande pour une installation d'énergie éolienne

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **27.04.2007  DE 102007019907**

(43) Veröffentlichungstag der Anmeldung:
**21.01.2009  Patentblatt 2009/04**

(73) Patentinhaber: **Nordex Energy GmbH**
**22848 Norderstedt (DE)**

(72) Erfinder:
• **Laubrock, Malte**
  **22335 Hamburg (DE)**

• **Woldmann, Thomas Paul**
  **21129 Hamburg (DE)**
• **Bilges, Sören**
  **27283 Verden (DE)**

(74) Vertreter: **Hauck Patent- und Rechtsanwälte**
**Neuer Wall 50**
**20354 Hamburg (DE)**

(56) Entgegenhaltungen:
**EP-A1- 0 223 731      EP-A2- 1 643 122**
**WO-A1-2004/112234**

**Beschreibung**

Die vorliegende Erfindung betrifft ein Verfahren zur aktiven Dämpfung von Schwingungen an und/oder in einem Triebstrang einer Windenergieanlage.

Unter Triebstrang wird üblicherweise der Aufbau aus Rotor, Rotorwelle (langsamer Welle), Getriebe, Generatorwelle (schneller Welle), Kupplung und Generator verstanden. Für Windenergieanlagen ist es allgemein bekannt, daß Schwingungsanregungen des Triebstrangs verschiedene Ursachen haben können. In erster Linie kommen hierbei umlaufperiodische Störungen in Betracht, wie beispielsweise Turmwindschatten oder Turmvorstau, Höhenprofil der Windgeschwindigkeit, Rotorschräganströmung durch Gierwinkel oder Achsschrägneigung und/oder Massenunwuchten der Rotorblätter. Neben den äußeren Anregungen, die als Vielfache der Rotordrehzahl auftreten, treten auch generatorseitig Störungen auf, wie beispielsweise Netzfehler, elektrische Netzschwingungen bei sehr langen Netzzuleitungen, Schwingungen von Umrichtern und Gleichstromzwischenkreisen, Regelungseinflüsse und beim Inselbetrieb Verbraucherrückkopplung. Eine Übersicht über die Schwingungsanregung und die dabei auftretenden Resonanzen finden sich im Lehrbuch von Erich Hau, Windkraftanlagen, 3. Aufl., Springer-Verlag Berlin, Kapitel 11.2.4.

Aus WO 2004/112234 A1 ist ein Verfahren zur Dämpfung einer Torsionsschwingung an einem rotierenden Antriebsstrang bekannt. Zur Dämpfung ist hierbei eine Dämpfungsvorrichtung vorgesehen, die auf eine Resonanzfrequenz der Torsionsschwingung abgestimmt ist. Die Abstimmung soll von der Resonanzfrequenz des Triebstrangs um nicht mehr als 3 % abweichen.

Aus EP 1 643 122 A2 ist ein Dämpfungssystem für Windenergieanlagen mit variabler Geschwindigkeit bekannt. Das Dämpfungssystem erfaßt den Istwert der Drehzahl an der Generatorwelle. Der Istwert wird an eine Steuerung weitergeleitet, die abhängig von der Drehzahl einen Sollwert für das am Generator anliegende Drehmoment bestimmt. Zur Vermeidung von Schwingungen ist ein Vibrationsdämpfer vorgesehen, dessen Parameter abhängig von der Resonanzfrequenz des Antriebsstrangs, einer Resonanzfrequenz für Turmschwingungen und von der Bewegung des Rotorblatts an dem Turm vorbei adaptiert werden. An dem Schwingungsdämpfer liegt als Eingang ein Signal an, das ein Maß für die Generatordrehzahl ist und das zur Erzeugung eines Antwortsignals verstärkt wird. Um den Schwingungsdämpfer zu adaptieren, ist eine Detektionseinrichtung vorgesehen, die die Resonanzfrequenz des Turms und des Antriebsstrangs fortlaufend berechnet und die berechneten Werte an den Dämpfer weiterleitet. Die Detektionseinrichtung tastet hierfür periodisch die Generatordrehzahl ab. Schwingungen verursachen Änderungen in der Generatordrehzahl, die von der Detektionseinrichtung aus dem Zeitbereich in den Frequenzbereich transformiert werden. Die Frequenzsignale werden an den Vibrationsdämpfer weitergeleitet.

Der Erfindung liegt die Aufgabe zugrunde, ein Verfahren zur aktiven Triebstrangdämpfung bereitzustellen, das mit einfachen Mitteln zuverlässig eine Dämpfung erlaubt.

Erfindungsgemäß wird die Aufgabe durch ein Verfahren gemäß Anspruch 1 gelöst. Vorteilhafte Ausgestaltungen bilden den Gegenstand der Unteransprüche.

Das erfindungsgemäße Verfahren ist zur aktiven Dämpfung eines Triebstrangs bei einer Windenergieanlage vorgesehen. In dem Verfahren wird der Istwert der Generatordrehzahl erfaßt und über ein schwingungsfähiges Verzögerungselement verstärkt. Das schwingungsfähige Verzögerungselement besitzt eine Schwingungseigenfrequenz, die kleiner als die kleinste Eigenfrequenz des Triebstrangs ist. Die Differenz von Istwert und verstärktem Wert für diese Drehzahl wird als Regeldifferenz an einen Regler angelegt, der ein Korrekturmoment für eine Generatorsteuerung bestimmt. Bei dem erfindungsgemäßen Verfahren ist für das schwingungsfähige Verzögerungselement eine vorbestimmte Schwingungseigenfrequenz vorgesehen, die für eine Windenergieanlage oder eine Familie von Windenergieanlagen vorgegeben ist. Die vorbestimmte Schwingungseigenfrequenz ermöglicht es, auf eine adaptive Anpassung des Verzögerungselements während des Betriebs der Anlage zu verzichten.

Zur Ermittlung des Korrekturmoments ist bei dem erfindungsgemäßen Verfahren ein Regler vorgesehen, an dem der Differenzwert zwischen dem Istwert der Drehzahl und dem verstärkten Wert der Drehzahl anliegt. Für das erfindungsgemäße Verfahren hat es sich überraschend herausgestellt, daß dies ohne Anpassung der Parameter sowohl für das schwingungsfähige Verzögerungselement als auch für den Regler bei Windenergieanlagen eingesetzt werden kann, die unterschiedliche Komponenten besitzen.

In einer bevorzugten Ausgestaltung besitzt das schwingungsfähige Verzögerungselement eine vorbestimmte Schwingungseigenfrequenz, die mindestens 8 %, vorzugsweise mindestens 12 % kleiner als die kleinste am Triebstrang auftretende Eigenfrequenz ist. Durch die Wahl der vorbestimmten Schwingungseigenfrequenz an dem schwingungsfähigen Verzögerungselement wird einerseits sichergestellt, daß Änderungen der Drehzahl, wie sie beispielsweise durch Böen oder durch das Eingreifen eines Pitchsystems auftreten, nicht zur Erzeugung eines Korrekturmoments für die Generatorsteuerung führen. Andererseits wird durch die Wahl der Schwingungseigenfrequenz sichergestellt, daß Resonanzschwingungen rechtzeitig gedämpft und zu große Belastungen für den Triebstrang und seine Komponenten vermieden werden.

In einer bevorzugten Ausführung ist das schwingungsfähige Verzögerungselement als PT2-Element ausgeführt. Bevorzugt ist für das schwingungsfähige Verzögerungselement eine geringe Dämpfungskonstante D gewählt, deren Wert bevorzugt im Bereich von 0,05 bis 0,25 liegt. Auch bei der Wahl der Dämpfungskonstante hat sich herausgestellt, daß mit einem vorbestimmten Wert für die Dämpfungskonstante eine wirkungsvolle Schwingungsdämpfung für Windenergieanlagen mit unterschiedlichen Komponenten möglich ist.

Bevorzugt ist der Regler zur Ermittlung des Korrekturmoments als ein PID-Regler ausgeführt, wobei der PID-Regler auch als Proportionalregler, bei dem der differentielle Anteil (D-Anteil) und/oder der integrale Anteil (I-Anteil) auf Null gesetzt sind, ausgeführt sein kann.

Das erfindungsgemäße Verfahren wird nachfolgend an einem Beispiel näher erläutert.

Die einzige Figur zeigt Elemente des Triebstrangmodells und die Grundstruktur des Reglerkreises in einer schematischen Ansicht.

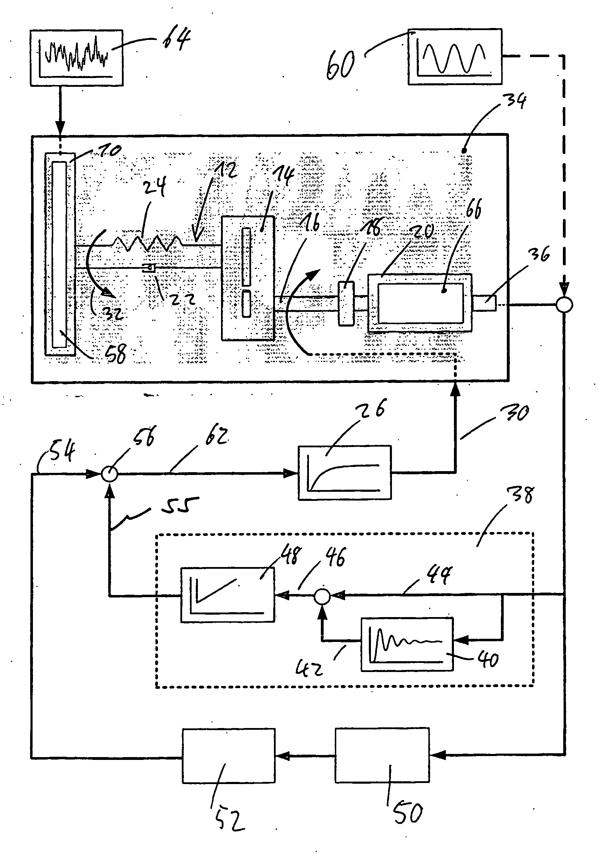

Die Figur zeigt in einer Übersicht den Aufbau wesentlicher Elemente des Triebstrangs 34 einer Windenergieanlage. Schematisch dargestellt mit 10 ist der Rotor bestehend aus Rotorblättern und einem Rotornabengehäuse. Durch die Wirkung des Winds 64 auf den Rotor 10 wird ein Rotordrehmoment 32 erzeugt und die rotorseitige Welle 12 angetrieben. Die Rotorwelle 12 mündet in ein Getriebe 14, dessen Ausgangswelle als Generatorwelle 16 bezeichnet wird. Die Generatorwelle 16 ist über eine Kupplung 18 mit einer Eingangswelle des Generators 20 verbunden. Für ein besseres Verständnis der auftretenden Schwingungen an dem Triebstrang kann die Rotorwelle 12 als elastisch angenommen werden, was in der Figur 1 durch ein Dämpfungselement 22 und eine elastische Feder 24 dargestellt ist. Für die vorliegende Betrachtung kommt es auf die auftretenden Torsionsschwingungen an der Welle 12 an. Feder 24 und Dämpfungselement 22 sind daher zur Kennzeichnung der Elastizität der Rotorwelle bei Torsionsschwingungen ausgelegt, wobei die Größen als konzentrierte Ersatzgrößen des gesamten Triebstrangs zu verstehen sind. Das Getriebe wird als idealer Übersetzer angesehen, der keine elastischen Eigenschaften besitzt. Bei dem dargestellten Aufbau kann auch die Generatorwelle 16 als elastisch angenommen werden, dann sind die Größen von der Rotorwelle 12 entsprechend dem Übersetzungsverhältnis des Getriebes 14 auf die Generatorwelle 16 umzurechnen. Rotor und Generator werden als zwei Massenträgheitsmomente angenommen, die sich jeweils um ihre Achsen drehen.

Aus diesem Ansatz ergeben sich drei verschiedene Momente, die für eine Dämpfung des Triebstrangs zu betrachten sind. Das erste Moment ist das Beschleunigungsmoment der Masse, das sich aus dem Produkt von Massenträgheitsmoment und Winkelbeschleunigung ergibt. Das zweite Moment ist das Trägheitsmoment des Federelements, das sich als Produkt der Drehfedersteifigkeit und der Winkeldifferenz zwischen den Enden der Wellen bestimmt. Das dritte Moment ist das Übertragungsmoment durch die Dämpfung, das sich als Produkt der mechanischen Dämpfung und der Winkelgeschwindigkeitsdifferenz an den Enden der Welle ergibt.

Das System aus Generator und Umrichter 26 ist zur besseren Übersicht als eine Einheit dargestellt, an der ein Sollwert 62 für das Generatormoment anliegt. Generator/Umrichter 26 werden entsprechend angesteuert, um ein Generatormoment 30 ($M_{GEN}$) anzulegen. Ebenfalls liegt ein vom Rotor stammendes Rotormoment 32 ($M_R$) an dem Triebstrang 34 an. In dem dargestellten Modell kann man sich vereinfacht vorstellen, daß das Rotormoment $M_R$ über das Massenträgheitsmoment $J_R$ 58 auf den Triebstrang wirkt und das Generatormoment $M_{GEN}$ an dem Trägheitsmoment $J_{GEN}$ 66 des Generators 20 an dem Triebstrang angreift. Die angreifenden Drehmomente 30 und 32 führen zu einer Drehzahl $n_{GEN}$ 44, die mit einem Drehzahlgeber 36 gemessen wird. Die Drehzahl 44 wird an einen Regler 38 weitergeleitet, der ein Korrekturmoment 55 bestimmt. Das Korrekturmoment 55 wird von dem Sollwert 54 für die Generator-Umrichter-Einheit subtrahiert. Bei einer konkreten Betrachtung der Vorzeichen für die Momente ist zu beachten, daß eine einheitliche Vorzeichenkonvention insbesondere auch für die Momente an Generator/Umrichter und die an den Enden des Triebstrangs angreifenden Momente eingehalten wird.

An der von dem Triebstrang 34 gebildeten Regelstrecke liegen das Rotormoment 32 und das Generatormoment 30 an. Die hieraus resultierende Drehzahl $n_{GEN}$ 44 liegt an dem Regler 38 an. Der Regler 38 besitzt einen Filter 40, der den anliegenden Istwert der Drehzahl verstärkt. Der Filter 40 arbeitet als schwingungsfähiges Verzögerungselement, das eine vorbestimmte Schwingungseigenfrequenz und eine Dämpfungskonstante D besitzt. Die verstärkte Drehzahl 42 wird von der am Triebstrang 34 gemessenen Drehzahl 44 subtrahiert und liegt als Regeldifferenz 46 an einem PID-Regler 48 an. Für den PID-Regler 48 hat es sich herausgestellt, daß der differentielle Anteil und der integrale Anteil zu Null gesetzt werden können, sodaß der PID-Regler als ein Proportionalverstärker arbeitet. Die verstärkte Regeldifferenz wird als Regelungssollwert dem Sollwert für das Generatormoment zugeführt.

Die Wirkungsweise des erfindungsgemäßen Verfahrens läßt sich besonders gut veranschaulichen, indem unerwünschte Schwingungen als Störgröße 60 betrachtet werden. Die Störgröße 60 ist dabei eine Überlagerung in der Drehzahl 44. In dem Filter 40 wird die überlagerte Größe, wenn sie im Bereich der Schwingungseigenfrequenz des Filters liegt, verstärkt, sodaß eine Regelgröße 46 an dem Regler 48 anliegt und ein Regeleingriff erfolgt. Liegt keine Störgröße an, oder eine Störgröße, die aufgrund ihrer Frequenz nicht durch das Filter 40 verstärkt wird, liegt an dem Regler 48 keine Regelgröße an und ein Regeleingriff unterbleibt. Mit der Verwendung geringer Dämpfungsgrade des PT2-Elements wird sichergestellt, daß eine effektive Eingrenzung des Regeleingriffs auf den Bereich der Eigenfrequenz des Triebstrangs erfolgt. Der gesamte Regler 38 benötigt für ein optimales Dämpfungsergebnis eine resultierende Gesamtverstärkung des Reglers, die sich aus dem P-Anteil des PID-Reglers und der Verstärkung des PT2-Elements zusammensetzt. Im Falle geringer Dämpfungsanteile des PT2-Elements wird der Hauptanteil der benötigten Verstärkung aus der Resonanzüberhöhung des Amplitudenganges des Elementes gewonnen und der P-Anteil des PID-Reglers leistet nur einen geringen Anteil.

Eine zentrale Steuerung der Windenergieanlage 50 bestimmt einen Sollwert für das Moment. In Verfahrensschritt 52 wird der Sollwert abhängig von der Vorzeichenkonvention des verwendeten Umrichters umgesetzt. Der so gewonnene Sollwert 54 für den Generator wird in 56 entsprechend korrigiert.

Zur Korrektur liegt der Istwert der Drehzahl an dem Filter 40 an, der als ein PT2-Element mit einer Dämpfungskonstanten D und einer Schwingungsdauer $T_0$ bzw. eine Schwingungseigenfrequenz $\omega_0 = 2\,\pi/T_0$ ausgebildet ist. Das so verstärkte Signal 42 wird von dem ursprünglichen Istwert 44 subtrahiert und anschließend proportional mit einem Faktor $K_P$ in dem Regler 48 verstärkt. Das verstärkte Signal 55 wird dann entsprechend der in 52 gewählten Vorzeichenkonvention addiert oder subtrahiert zu dem Sollwert des Generatormoments. Der resultierende Wert 62 ist der Sollwert, der an dem Umrichter/Generator angelegt wird.

Die Schwingungseigenfrequenz $\omega_E$ für den Filter 40 ergibt sich nach folgendem Ausdruck:

$$\omega_E = \frac{2\,\pi}{T_0}\sqrt{1 - D^2}$$

Erfindungsgemäß wird bevorzugt mit einer Dämpfungskonstante D im Bereich von 0, bis 0,2 gearbeitet. Die Schwingungszeit $T_0$ bzw. die Kennkreisfrequenz

$$\omega_0 = \frac{2\pi}{T_0}$$

sowie die Dämpfungskonstante D werden so gewählt, daß die Schwingungseigenfrequenz $\omega_E$ mindestens 10 % kleiner als die kleinste Schwingungseigenfrequenz des Triebstrangs ist. Zur robusten Parametrierung einer Anlagenfamilie erfolgt die Einstellung typischerweise im Bereich 20 % kleiner als die kleinste Schwingungseigenfrequenz des Triebstranges.

Bezugszeichenliste:

| | |
|---|---|
| 10 | Rotor |
| 12 | Rotorwelle / langsame Welle |
| 14 | Getriebe |
| 16 | Generatorwelle / schnelle Welle |
| 18 | Kupplung |
| 20 | Generator |
| 22 | Dämpfungselement |
| 24 | elastische Feder |
| 26 | System Generator / Umrichter |
| 30 | Generatormoment |
| 32 | Rotordrehmoment |
| 34 | Triebstrang |
| 36 | Drehzahlgeber |
| 38 | Regler |
| 40 | Verzögerungsglied (PT2-Glied) / Filter |
| 42 | Drehzahl (Wert nach Verstärkung / Verzögerung) |
| 44 | Drehzahl (Meßwert des Drehzahlgebers) |
| 46 | Regeldifferenz |
| 48 | Regler (P/PD/PI/PID-Glied) |
| 50 | Steuerung der Windenergieanlage |
| 52 | Vorzeichenkonvertierung |
| 54 | Sollwert des Moments (aus Steuerung) |
| 55 | Korrekturmoment |
| 56 | Sollwertkorrektur |
| 58 | Massenträgheitsmoment $J_R$ |
| 60 | Störgröße |
| 62 | Sollwert für das Generatormoment |
| 64 | Wind |
| 66 | Massenträgheitsmoment $J_{Gen}$ |

**Patentansprüche**

1. Verfahren zur aktiven Dämpfung eines Triebstrangs bei einer Windenergieanlage, mit folgenden Schritten:

   • der Istwert der Generatordrehzahl (36) wird erfaßt und über ein schwingungsfähiges Verzögerungselement (40) verstärkt,
   • das schwingungsfähige Verzögerungselement (40) besitzt eine vorbestimmte Schwingungseigenfrequenz ($\omega_E$), die kleiner als die kleinste Eigenfrequenz des Triebstrangs ist, und
   • eine Differenz von Istwert der Drehzahl (36) und verstärktem Wert für die Drehzahl (42) liegt als Regeldifferenz (46) an einem Regler (48) an, der ein Korrekturmoment (55) für eine Generatorsteuerung bestimmt.

2. Verfahren nach Anspruch 1, **dadurch gekennzeichnet, daß** das schwingungsfähige Verzögerungselement (40) eine Schwingungseigenfrequenz besitzt, die mindestens 8 %, vorzugsweise 12 % kleiner als die kleinste bei dem Triebstrang auftretende Eigenfrequenz ist.

3. Verfahren nach Anspruch 1 oder 2, **dadurch ge-**

**kennzeichnet, daß** das schwingungsfähige Verzögerungselement (40) als PT2-Element ausgeführt ist.

4. Verfahren nach Anspruch 3, **dadurch gekennzeichnet, daß** das schwingungsfähige Verzögerungselement (40) eine geringe Dämpfungskonstante von weniger als 0,5 besitzt.

5. Verfahren nach Anspruch 4, **dadurch gekennzeichnet, daß** die Dämpfungskonstante 0,05 bis 0,25 beträgt.

6. Verfahren nach einem der Ansprüche 1 bis 5, **dadurch gekennzeichnet, daß** der Regler (48) als ein PID-Regler ausgeführt ist.

7. Verfahren nach Anspruch 1 bis 5, **dadurch gekennzeichnet, daß** der Regler als Proportionalregler (P-Regler) ausgeführt ist.

8. Verfahren nach Anspruch 1 bis 5, **dadurch gekennzeichnet, daß** der Regler (48) als Proportional-Integral-Regler (PI-Regler) ausgeführt ist.

9. Verfahren nach Anspruch 1 bis 5, **dadurch gekennzeichnet, daß** der Regler (48) als Proportional-Differential-Regler (PD-Regler) ausgeführt ist.

**Claims**

1. A method for the active damping of a drive train in a wind energy plant, with the following steps:

    • the actual value of the generator rotational speed (36) is acquired and amplified via an oscillatory delay element (40),
    • the oscillatory delay element (40) has a predetermined oscillation eigenfrequency ($\omega_E$), which is smaller than the smallest eigenfrequency of the drive train, and
    • a difference between the actual value of the rotational speed (36) and the amplified value for the rotational speed (42) is connected as actuating variable (46) to a controller (48), which determines a correction moment (55) for a generator control unit.

2. A method according to claim 1, **characterised in that** the oscillatory delay element (40) has a oscillation eigenfrequency which is at least 8%, preferably 12% smaller than the smallest eigenfrequency occurring at the drive train.

3. A method according to claim 1 or 2, **characterised in that** the oscillatory delay element (40) is realised as a PT2-element.

4. A method according to claim 3, **characterised in that** the oscillatory delay element (40) has a small damping constant of less than 0,5.

5. A method according to claim 4, **characterised in that** the damping constant is 0,05 to 0,25.

6. A method according to any one of claims 1 to 5, **characterised in that** the controller (48) is realised as a PID-controller.

7. A method according to any one of claims 1 to 5, **characterised in that** the controller is realised as a proportional controller (P-controller).

8. A method according to any one of claims 1 to 5, **characterised in that** the controller is realised as a proportional-plus-integral controller (PI-controller).

9. A method according to any one of claims I to 5, **characterised in that** the controller is realised as a proportional-plus-derivative controller (PD-controller).

**Revendications**

1. Procédé d'atténuation active d'une ligne de commande pour une installation d'énergie éolienne, avec les étapes suivantes:

    • la valeur réelle de la vitesse de rotation (36) du générateur est acquise et amplifiée à travers un élément temporisateur de manière à pouvoir osciller (40),
    • l'élément temporisateur de manière à pouvoir osciller (40) a une fréquence de résonance d'oscillation prédéterminée ($\omega_E$) qui est plus petite que la plus petite fréquence de résonance de la ligne de commande, et
    • une différence entre la valeur réelle de la vitesse de rotation (36) et la valeur amplifiée pour la vitesse de rotation (42) est appliquée à un mécanisme régulateur (48) comme différence de régulation (46) qui détermine une couple de correction (55) pour une régulation de générateur.

2. Procédé selon la revendication 1, **caractérisé en ce que** l'élément temporisateur de manière à pouvoir osciller (40) a une fréquence de résonance d'oscillation qui est au moins 8%, de préférence 12% plus petite que la plus petite fréquence de résonance qui apparaît dans la ligne de commande.

3. Procédé selon la revendication 1 ou 2, **caractérisé en ce que** l'élément temporisateur de manière à pouvoir osciller (40) est réalisé comme un élément PT2.

**4.** Procédé selon la revendication 3, **caractérisé en ce que** l'élément temporisateur de manière à pouvoir osciller (40) a une faible constante d'atténuation de moins que 0,5.

**5.** Procédé selon la revendication 4, **caractérisé en ce que** la constante d'atténuation est 0,05 à 0,25.

**6.** Procédé selon l'une quelconque des revendications 1 à 5, **caractérisé en ce que** le mécanisme régulateur (48) est réalisé comme un régulateur PID.

**7.** Procédé selon les revendications 1 à 5, **caractérisé en ce que** le mécanisme régulateur est réalisé comme un régulateur proportionnel (régulateur P).

**8.** Procédé selon les revendications 1 à 5, **caractérisé en ce que** le mécanisme régulateur (48) est réalisé comme un régulateur proportionnel intégral (régulateur PI).

**9.** Procédé selon les revendications 1 à 5, **caractérisé en ce que** le mécanisme régulateur (48) est réalisé comme un régulateur proportionnel différentiel (régulateur PD).

**IN DER BESCHREIBUNG AUFGEFÜHRTE DOKUMENTE**

**In der Beschreibung aufgeführte Patentdokumente**

- WO 2004112234 A1
- EP 1643122 A2